# EUROPEAN PATENT APPLICATION

(11) **EP 4 832 639 A2**
(43) Date of publication of application: **28.10.2026**
(21) Application number: 26169311.3
(22) Date of filing: 30.03.2026
(51) Int. Cl.: H04W 72/56, H04W 52/02

(54) **METHOD, DEVICE, APPARATUS AND COMPUTER READABLE STORAGE MEDIUM FOR COMMUNICATION**

(30) Priority: 03.04.2025 CN 202510423415
(71) Applicant: Nokia Solutions and Networks Oy, 02610 Espoo (FI)
(72) Inventor: HUANG, Kai Kai, Shanghai (CN); CHENG, Gang, Shanghai (CN); JIANG, Yi Ming, Shanghai (CN); LUO, Ye, Shanghai (CN); MUTGAN, Orhan Okan, Munich (DE)
(74) Representative: Nokia EPO representatives

(57) **Abstract**

An example embodiment of the present disclosure relates to a device, method, apparatus and computer readable storage medium for communication. A method for communication comprises: receiving, by a first device (110) from a second device (120), information associated with an unavailability control operation of the first device (110) with a predetermined frame structure, wherein the information at least indicates that the second device (120) will transmit first data of a first type in a preset time period; determining, based on the information, whether to communicate with the second device (120) in the preset time period; and responsive to determining to communicate with the second device (120) in the preset time period, receiving the first data from the second device (120) in the preset time period.

## Description

### TECHNICAL FIELD

Embodiments of the present disclosure generally relate to the field of communication technology, and more specifically to methods, devices, apparatuses and computer readable storage media for communication.

### BACKGROUND

Wireless channels are fundamental to system design, network optimisation and performance evaluation. In some scenarios, such as off-channel scanning, Peer-to-Peer (P2P) networks, Licensed-Assisted Access (LAA), and 5G New Radio in Unlicensed Spectrum (5G NR-U), or when transmitting different types of data, wireless channels may be occupied.

In some discussed solutions, low latency and reliability are key focuses. In some scenarios, unavailability signaling for coexistence (e.g., intra-device coexistence between Bluetooth and Wi-Fi) has been proposed. However, details regarding these solutions require further refinement. In some contexts, low latency data packets or emergency data packets in a transmission queue may be delayed due to an unavailability period at the receiving side, resulting in latency and packet loss issues.

For example, when an Access Point (AP) attempts to transmit game data, a Station (STA) may be transmitting Bluetooth music data. At this time, the STA is unavailable to receive the game data. For some users, game traffic is more important than music traffic. However, based on unavailability signaling methods in some discussed solutions, once the STA issues an unavailability signaling due to coexistence, the AP must delay sending data packets during the unavailability period. Consequently, the game data is delayed, although the user might consider the Bluetooth music data to be deferrable.

Similarly, for Emergency Preparedness Communications Service (EPCS), priority access functions are defined to support National Security and Emergency Preparedness (NSEP). As this is prepared for emergency services, the preparation phase cannot be delayed. If an AP attempts to send an EPCS priority access request frame and the STA has triggered an EPCS request with data packets in a queue, once the AP reports any long-term or short-term unavailability, the EPCS setup management frame will be delayed. Without a mechanism to control peer unavailability, EPCS data packets will also be affected.

Therefore, there is a need to define a mechanism or signaling method to address priority issues between services in a sender's transmission queue and unavailability services at a receiver..

### SUMMARY

In a first aspect of the present disclosure, there is provided a method for communication. The method comprises: receiving, by a first device from a second device, information associated with an unavailability control operation of the first device with a predetermined frame structure, wherein the information at least indicates that the second device will transmit first data of a first type in a preset time period; determining, based on the information, whether to communicate with the second device in the preset time period; and responsive to determining to communicate with the second device in the preset time period, receiving the first data from the second device in the preset time period.

In a second aspect of the present disclosure, there is provided a method for communication. The method comprises: transmitting, by a second device to a first device, information associated with an unavailability control operation of the first device with a predetermined frame structure, wherein the information at least indicates that the second device will transmit first data of a first type in a preset time period; and transmitting the first data to the first device in the preset time period.

In a third aspect of the present disclosure, there is provided a method for communication. The method comprises: receiving, by a third device from a first device, unavailability information of the first device via a target wakeup time element with a specific frame including a channel use request, wherein the unavailability information at least indicates that the first device will transmit second data of a second type in a preset time period, the target wakeup time element comprising at least a peer-to-peer target wakeup time element and a broadcast target wakeup time element; and transmitting the unavailability information of the first device to a second device via a management frame or an initial control frame.

In a fourth aspect of the present disclosure, there is provided a device for communication. The device comprises at least one processor; and at least one memory coupled to the at least one processor, the at least one memory having instructions stored therein, the at least one memory and the instructions further configured to, with the at least one processor, cause the device to perform the method according to the first aspect, the second aspect, or the third aspect.

In a fifth aspect of the present disclosure, there is provided an apparatus for communication. The apparatus comprises means for performing the method according to the first aspect, the second aspect, or the third aspect.

In a sixth aspect of the present disclosure, there is provided a computer readable storage medium having a computer program stored thereon, the computer program comprising instructions which, when executed by a processor on a device, cause the device to perform the method according to the first aspect, the second aspect, or the third aspect.

It should be understood that the content described in the Summary of the Invention section is not intended to identify key or essential features of the embodiments of the present disclosure, nor is it intended to limit the scope of the present disclosure. Other features of the present disclosure will become readily understandable from the following description.

### BRIEF DESCRIPTION OF THE DRAWINGS

Example embodiments of the present disclosure are presented by way of example, and their advantages are explained in more detail below with reference to the accompanying drawings, in which:
Fig. 1 shows a schematic diagram of an environment in which the example embodiments described in the present disclosure may be implemented;
Figs. 2A to 2B show schematic diagrams of unavailability periods of a station;
Figs. 3A to 3B show schematic diagrams of communication processes according to some example embodiments of the present disclosure;
Fig. 4 shows a schematic diagram of a communication process according to some example embodiments of the present disclosure;
Fig. 5 shows a schematic diagram of example unavailability control information according to some example embodiments of the present disclosure;
Fig. 6 shows a schematic diagram of a communication process according to some example embodiments of the present disclosure;
Figs. 7A to 7C show schematic diagrams of fields according to some example embodiments of the present disclosure;
Fig. 8 shows a schematic diagram of a communication process according to some example embodiments of the present disclosure;
Figs. 9A to 9B show schematic diagrams of frame formats according to some example embodiments of the present disclosure;
Fig. 10 shows a schematic diagram of a communication process according to some example embodiments of the present disclosure;
Fig. 11 shows a flowchart of a communication method according to some example embodiments of the present disclosure;
Fig. 12 shows a flowchart of a communication method according to some example embodiments of the present disclosure;
Fig. 13 shows a flowchart of a communication method according to some example embodiments of the present disclosure;
Fig. 14 shows a simplified block diagram of a device suitable for implementing the example embodiments of the present disclosure; and
Fig. 15 shows a schematic diagram of a computer readable medium according to some example embodiments of the present disclosure.

In all drawings, identical or similar reference signs denote identical or similar elements.

### DETAILED DESCRIPTION OF SOME SPECIFIC EMBODIMENTS

The principles and spirit of the present disclosure will be described below with reference to several exemplary embodiments shown in the accompanying drawings. It should be understood that these specific example embodiments are described merely to enable those skilled in the art to better understand and implement the present disclosure, and not to limit the scope of the present disclosure in any way.

As used herein, the term "comprising" and similar terms should be understood as open inclusion, i.e., "including but not limited to". The term "based on" should be understood as "based at least partially on". The term "one embodiment" or "the embodiment" should be understood as "at least one embodiment". The terms "first", "second", etc. may refer to different or identical objects. Other explicit and implicit definitions may be included below.

As used herein, the term "determining" encompasses a wide variety of actions. For example, "determining" may include calculating, computing, processing, deriving, investigating, looking up (e.g., looking up in a table, database or another data structure), ascertaining, and the like. Furthermore, "determining" may include receiving (e.g., receiving information), accessing (e.g., accessing data in memory), and the like. In addition, "determining" may include resolving, selecting, choosing, establishing, and the like.

In this context, unless explicitly stated, performing a step "responsive to A" does not mean performing the step immediately after "A", but may include one or more intermediate steps.

The term "circuitry" as used herein refers to one or more of the following: (a) hardware-only circuit implementations (such as implementations in only analog and/or digital circuits); and (b) combinations of hardware circuits and software, such as (where applicable): (i) a combination of analog and/or digital hardware circuits with software/firmware, and (ii) any portion of hardware processors with software (including digital signal processors, software, and memory that work together to cause devices such as optical communication devices or other computing devices to perform various functions); and (c) hardware circuits and/or processors, such as microprocessors or portions of microprocessors, that require software (e.g., firmware) for operation, but may have no software when not needed for operation.

The definition of circuitry applies to all uses of this term in this application (including in any claims). As another example, the term "circuitry" as used herein also covers implementations of only hardware circuits or processors (or multiple processors), or portions of hardware circuits or processors, or their accompanying software or firmware. For example, if applicable to specific claim elements, the term "circuitry" also covers baseband integrated circuits or processor integrated circuits or similar integrated circuits in OLT or other computing devices.

As used herein, the term "communication network" refers to a network following any suitable communication standard, such as New Radio (NR), Long Term Evolution (LTE), LTE-Advanced (LTE-A), Wideband Code Division Multiple Access (WCDMA), High Speed Packet Access (HSPA), Narrow Band Internet of Things (NB-IoT), and so on. Furthermore, communication between terminal equipment and network equipment in a communication network may be performed according to any suitable generation of communication protocols, including but not limited to, 1st Generation (1G), 2nd Generation (2G), 2.5G, 2.75G, 3rd Generation (3G), 4th Generation (4G), 4.5G, 5th Generation (5G), 6th Generation (6G) communication protocols and/or any other protocols currently known or to be developed in the future. The example embodiments of the present disclosure may be applied to various communication systems, including but not limited to terrestrial communication systems, non-terrestrial communication systems, or combinations thereof. Considering the rapid development in the field of communications, there will naturally be future types of communication technologies and systems that may be used to implement the present disclosure. It should not be considered as limiting the scope of the present disclosure to only the aforementioned systems.

As used herein, the term "network equipment" refers to a node in a communication network through which terminal equipment accesses the network and receives services. Depending on the applied terminology and technology, network equipment may refer to a Base Station (BS) or Access Point (AP), such as NodeB (NodeB or NB), evolved NodeB (eNodeB or eNB), NR NB (also known as gNB), Remote Radio Unit (RRU), Radio Head (RH), Remote Radio Head (RRH), Relay, Integrated Access and Backhaul (IAB) node, low power nodes such as femto, pico, and so on.

As used herein, the term "terminal equipment" refers to any terminal equipment capable of wireless communication. By way of example and not limitation, terminal equipment may also be referred to as network equipment, User Equipment (UE), Subscriber Station (SS), Portable Subscriber Station, Mobile Station (MS) or Access Terminal (AT). Terminal equipment may include but is not limited to mobile phones, cellular phones, smart phones, Voice over IP (VoIP) phones, wireless local loop phones, tablet computers, wearable terminal equipment, Personal Digital Assistants (PDAs), portable computers, desktop computers, image capture terminal equipment such as digital cameras, game terminal equipment, music storage and playback devices, vehicle-mounted wireless terminal equipment, wireless endpoints, mobile stations, Laptop Embedded Equipment (LEE), Laptop Mounted Equipment (LME), Universal Serial Bus (USB) dongles, smart devices, Wireless Customer Premises Equipment (CPE), Internet of Things (IoT) devices, watches or other wearable devices, Head-Mounted Displays (HMDs), vehicles, drones, medical equipment and applications (e.g., remote surgery), industrial equipment and applications (e.g., robots and/or other wireless devices operating in industrial and/or automated processing chain environments), consumer electronics, devices running on commercial and/or industrial wireless networks, etc. Terminal equipment may correspond to the Mobile Terminal (MT) part of an IAB node (e.g., a relay node). In the following description, the terms "terminal equipment", "network equipment", "terminal", "user equipment" and "UE" may be used interchangeably.

As used herein, the term "circuit" refers to any of the following:(a) solely hardware circuit implementations (e.g., only analog and/or digital circuits); and (b) combinations of hardware circuits and software, such as (if applicable): (i) combinations of analog and/or digital hardware circuits with software/firmware; or (ii) any portion of a hardware processor with software (including digital signal processors, software and memory working together to cause devices such as optical line terminals or other computing devices to perform various functions); and (c) hardware circuits and/or processors, such as microprocessors or portions thereof, which require software (e.g., firmware) for operation but may operate without software when not required.

The definition of circuit applies to all uses of this term in the present disclosure (including any claims). As another example, the term "circuit" herein also covers implementations consisting solely of hardware circuits or processors (or multiple processors), portions thereof, or their associated software or firmware. For instance, if applicable to a specific claim element, the term "circuit" also covers baseband integrated circuits or processor integrated circuits or similar integrated circuits in optical line terminals or other computing devices.

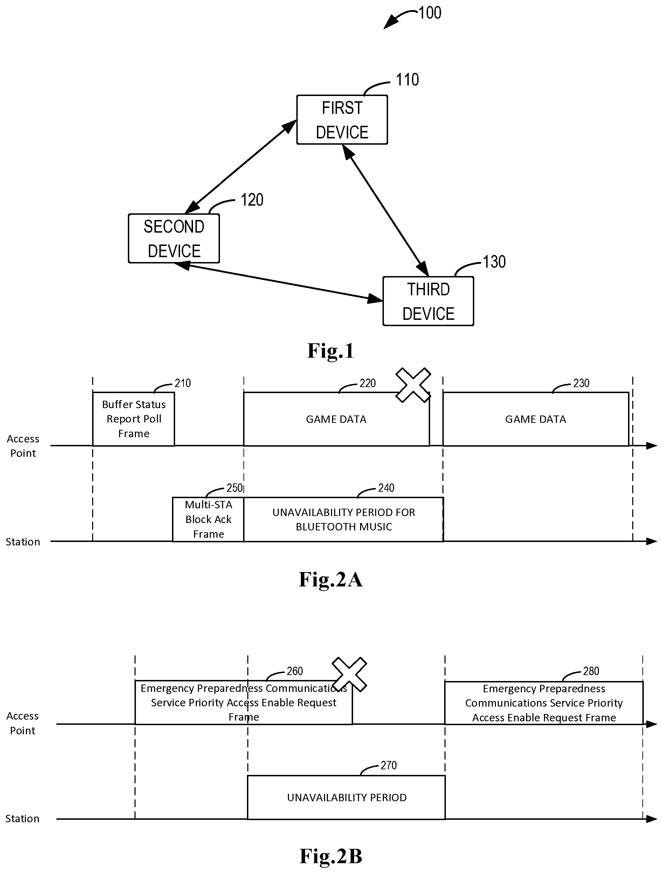

Fig. 1 shows a schematic diagram of an example communication network 100 in which the example embodiments described in the present disclosure may be implemented. The communication network 100 may be part of a communication network. In the communication network 100, a first device 110, a second device 120 and a third device 130 are included. The second device 120 and the third device 130 may communicate with the first device 110, and the second device 120 may communicate with the third device 130.

In some example embodiments, the first device 110 may be any access station (STA) or access terminal capable of accessing wireless network coverage provided by the second device 120 or the third device 130.

In some example embodiments, the second device 120 or the third device 130 may include, for example, a wireless router configured to provide wireless network coverage to an indoor environment where a user is located. The wireless router may be a network equipment conforming to the 802.11 series standards or implemented by any suitable device, such as a Wi-Fi Access Point (AP). The second device 120 or the third device 130 may communicate with other network equipment (e.g., base stations), for example, to provide wireless network coverage to terminal equipment within a specific range, and the scope of the present disclosure is not limited in this regard.

In some other example embodiments, the first device 110 may be an AP, while the second device 120 or the third device 130 may also be a STA. In some further example embodiments, the first device 110, the second device 120 and the third device 130 may all be STAs.

In some embodiments, the AP and STA may be devices supporting Multi-Link Operation (MLO). Such devices are also referred to as Multi-Link Devices (MLD). That is, data transmission may be utilized between the aforementioned AP and STA using multiple communication links. In this case, the second device 120 or the third device 130 may be an AP MLD and the first device 110 may be a Non-AP MLD. Alternatively, the second device 120 or the third device 130 may be a Non-AP MLD and the first device 110 may be an AP MLD.

In some other embodiments, the first device 110, the second device 120 and the third device 130 may all be AP MLDs or all be Non-AP MLDs.

In some example embodiments, where the first device 110 is a STA and the second device 120 or the third device 130 is an AP, the link from the first device 110 to the second device 120 or the third device 130 may be referred to as an Uplink (UL), and the link from the second device 120 or the third device 130 to the first device 110 may be referred to as a Downlink (DL). In the DL, the second device 120 or the third device 130 is a transmitting (TX) device (or transmitter), and the first device 110 is a receiving (RX) device (or receiver). In the UL, the first device 110 is a TX device (or transmitter), and the second device 120 or the third device 130 is an RX device (or receiver).

It should be understood that the number of devices and their connections shown in Fig. 1 are merely schematic and not limiting. The communication network 100 may include any suitable number of devices configured to implement the example embodiments of the present disclosure. Although not shown, it should be understood that one or more other devices may be deployed in the communication network 100.

Communication in the communication network 100 may be implemented according to any suitable communication protocol(s). Examples of communication protocols include but are not limited to cellular communication protocols such as 1st Generation (1G), 2nd Generation (2G), 2.5G, 2.75G, 3rd Generation (3G), 4th Generation (4G), 4.5G, 5th Generation (5G), 6th Generation (6G), Wireless Local Area Network communication protocols such as Institute of Electrical and Electronics Engineers (IEEE) 802.11, and/or any other protocols currently known or to be developed in the future.

Furthermore, communication may utilize any suitable wireless communication technology, including but not limited to: Code Division Multiple Access (CDMA), Frequency Division Multiple Access (FDMA), Time Division Multiple Access (TDMA), Frequency Division Duplex (FDD), Time Division Duplex (TDD), Multiple Input Multiple Output (MIMO), Orthogonal Frequency Division Multiplexing (OFDM), Discrete Fourier Transform spread Orthogonal Frequency Division Multiplexing (DFT-s-OFDM), and/or any other technology currently known or to be developed in the future.

In some discussed solutions, low latency and reliability are key focuses. In some scenarios, unavailability signaling for coexistence (e.g., intra-device coexistence between Bluetooth and Wi-Fi) has been proposed. However, details regarding these solutions require further refinement. In some contexts, low latency data packets or emergency data packets in a transmission queue may be delayed due to an unavailability period at the receiving side, resulting in latency and packet loss issues.

Fig. 2A shows an unavailability scenario related to low latency data. As shown in Fig. 2A, when a user plays an online game via Wi-Fi using a mobile phone, an Access Point first transmits a Buffer Status Report Poll frame 210 to a Station (i.e., the mobile phone) to establish a link. Afterwards, the Access Point transmits a Multi-STA Block Ack frame 250 to the Access Point to respond to its link request.

In some contexts, the user may listen to music using a Bluetooth device while playing the game. When the Access Point attempts to transmit game data 220, the Station is transmitting Bluetooth music data 240. At this time, the Station cannot receive the game data 220, i.e., the Station is unavailable to the Access Point at this time.

For some users, game traffic is more important than music traffic. However, based on unavailability signaling methods in some discussed solutions, when unavailability occurs due to coexistence issues, once the Station issues unavailability signaling, the Access Point must delay sending data packets during the unavailability period. For example, the Access Point retransmits the game data 230 after delaying for a period of time. In this case, the game data 220 can only be transmitted after the unavailability period of the Station. Therefore, the game data 220 will be delayed, but the user might consider the Bluetooth music data 240 related to Bluetooth to be deferrable.

Fig. 2B shows an unavailability scenario related to emergency data. The priority access function of Emergency Preparedness Communications Service (EPCS) is defined to support National Security and Emergency Preparedness (NSEP). As this is prepared for emergency services, the preparation phase cannot be delayed.

As shown in Fig. 2B, when an Access Point attempts to transmit an EPCS Priority Access Request frame 260 to a Station, if the Station has triggered an EPCS request by an upper layer and data packets are already in a queue, once the Access Point reports any long-term or short-term unavailability (e.g., unavailability period 270), the EPCS setup management frame will be delayed. Without a mechanism to control peer unavailability, EPCS data packets will also be affected. For example, EPCS data packets can only be delayed for transmission (e.g., via EPCS Priority Access Request frame 280). If there is low latency data or high priority data in the transmission queue of the transmitting side, however, the receiving side reports unavailability, then these important data will be delayed.

Therefore, there is a need to define a mechanism or signaling method to address priority issues between services in a sender's transmission queue and unavailability services at a receiver.

Therefore, embodiments of the present disclosure propose a scheme for communication. In this scheme, the first device 110 receives information associated with an unavailability control operation of the first device 110 from the second device 120 with a predetermined frame structure. The aforementioned information at least indicates that the second device 120 will transmit first data of a first type in a preset time period. The first device 110 determines, based on the information, whether to communicate with the second device 120 in the preset time period. The first device 110, responsive to determining to communicate with the second device 120 in the preset time period, receives the first data from the second device 120 in the preset time period.

Embodiments of the present disclosure can control the unavailability period at the receiving side based on information such as service priority, activity priority, low latency services, and EPCS services. Furthermore, embodiments of the present disclosure can also add service indications (e.g., unavailability period control indications) to data packets in a transmission queue, so that the receiving side can make decisions regarding unavailability periods based on the indications.

In this way, in cases such as off-channel scanning or resource conflicts, the receiving side can control its own unavailability period based on information from the transmitting side, thereby avoiding transmission delays of high priority data, increasing data transmission efficiency and improving data transmission success rate.

The principles and example implementations of the present disclosure will be described in further detail below with reference to the accompanying drawings.

In some embodiments, the disclosed technical solutions can share unavailability control capabilities between different devices (e.g., between Access Points, between an Access Point and a Station). The aforementioned unavailability control capability indicates whether the device supports a specific unavailability period control mode.

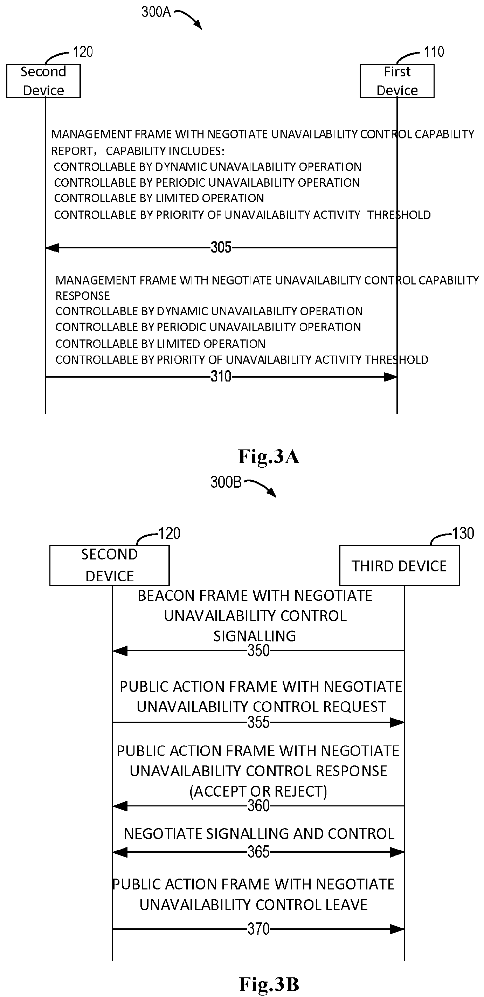

Fig. 3A shows a schematic diagram of a communication process 300A according to some example embodiments of the present disclosure. The communication process 300A shown in Fig. 3A may involve, for example, the first device 110 and the second device 120. For convenience of explanation, the communication process 300 will be described with reference to the example environment shown in Fig. 1.

It should be understood that at least part of the actions performed at the first device 110 in the communication process may also be performed at the second device 120. At least part of the actions performed at the second device 120 may also be performed at the first device 110.

Fig. 3A shows a scenario where the first device 110 reports its unavailability control capability to the second device 120. The first device 110 and the second device 120 may include, for example, devices supporting multi-link operation.

As shown in Fig. 3A, the first device 110 may transmit (305) a capability report to the second device 120 via a management frame. The capability report may indicate whether the first device 110 supports an unavailability control mode.

In some embodiments, the aforementioned unavailability control mode may include a Dynamic Unavailability Operation (DUO) mode. In this mode, an Access Point (e.g., the second device 120) may transmit an indication of services in a queue to a Station (e.g., the first device 110), and the first device 110 may determine whether to control its own unavailability period (e.g., cancel the unavailability period, or still report the unavailability period) based on the priority of data to be transmitted by the second device 120.

In some embodiments, the unavailability control mode may include a Periodic Unavailability Operation (PUO) mode. In this mode, the first device 110 may transmit unavailability information to the second device 120, the information including the type of data the first device 110 will transmit, and the second device 120 may transmit an unavailability control instruction or control message to the first device 110 based on this information to indicate the first device 110 to cancel its unavailability period.

In some embodiments, the unavailability control mode may also include a Limited Operation Mode (LOM). In this mode, the operational options and processing capabilities of the device are lower, and the operational processes of the aforementioned PUO mode or DUO mode are also applicable to LOM.

In some embodiments, the unavailability control mode may also include an unavailability operation mode based on a priority threshold. For example, controlling the unavailability period based on the type of data to be transmitted or based on the type of service being performed.

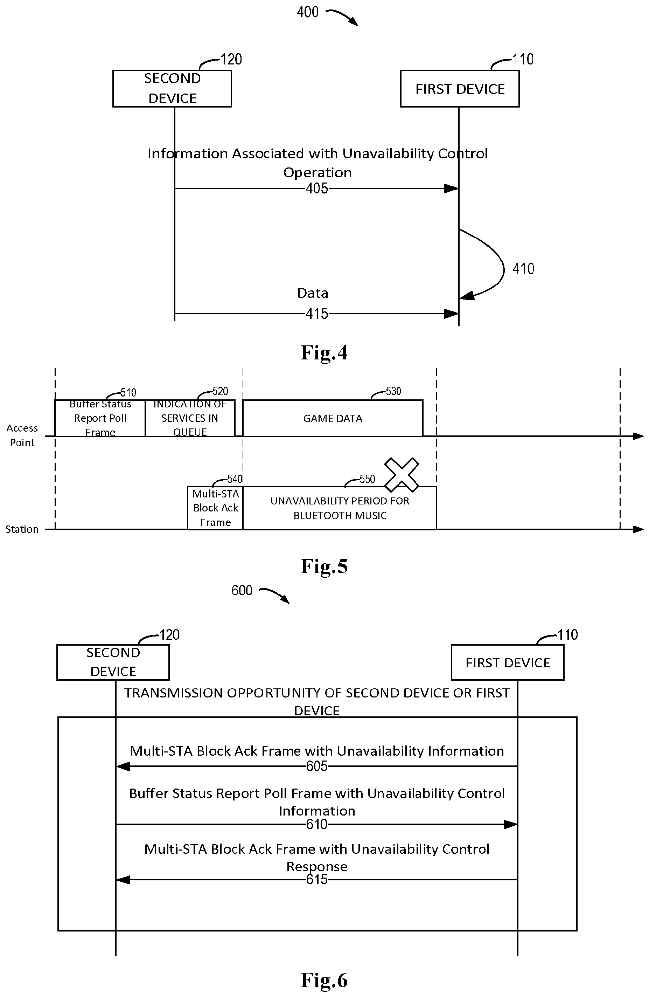

The aforementioned various unavailability control modes will be described in detail below with reference to Figs. 4 to 10.

Continuing with reference to Fig. 3A, based on the unavailability control capability report received from the first device 110, the second device 120 may transmit (310) an unavailability control capability response to the first device 110 via a management frame.

In some embodiments, the aforementioned unavailability control capability includes negotiating unavailability capability, which capability indicates whether the device can share information regarding unavailability control capability with other devices.

Fig. 3B shows a schematic diagram of a communication process 300B according to some example embodiments of the present disclosure. The communication process 300B shown in Fig. 3B may involve, for example, the second device 120 and the third device 130. For convenience of explanation, the communication process 300 will be described with reference to the example environment shown in Fig. 1.

It should be understood that at least part of the actions performed at the second device 120 in the communication process may also be performed at the third device 130. At least part of the actions performed at the third device 130 may also be performed at the second device 120.

Fig. 3B shows a scenario where the second device 120 shares unavailability control capability with the third device 130. The second device 120 and the third device 130 may include, for example, devices supporting multi-link operation.

As shown in Fig. 3B, the third device 130 may exchange (350) capability negotiation information with the second device 120 via a management frame. In some examples, the management frame may include a beacon frame and a public action frame.

In some embodiments, the aforementioned capability negotiation information indicates that the second device 120 and the third device 130 possess the capability to share information associated with the unavailability control operation of the first device 110.

In some embodiments, the aforementioned information at least indicates that the second device 120 will transmit first data of a first type in a preset time period. For example, the aforementioned information may indicate data in a transmission queue of the second device 120.

In some embodiments, based on the received capability negotiation information, the second device 120 may transmit (355) a public action frame with a negotiate unavailability control request to the third device 130.

In some embodiments, responsive to the received negotiate unavailability control request, the third device 130 may transmit (360) a public action frame with a negotiate unavailability control response to the second device 120.

In some embodiments, the aforementioned negotiate unavailability control response may indicate whether the third device 130 accepts or rejects the negotiate unavailability control request of the second device 120.

In some embodiments, as shown in Fig. 3B, if the third device 130 accepts the aforementioned request, then the second device 120 and the third device 130 may mutually transmit (365) negotiate unavailability signaling and unavailability control to share their respective information associated with unavailability control.

In some embodiments, after the negotiation process concludes, the second device 120 may transmit (370) a public action frame with a negotiate unavailability control leave to the third device 130 to indicate the negotiation process is concluded.

Based on the aforementioned sharing process of unavailability control capabilities, devices in the network can acquire information associated with unavailability control. This information will be used to determine whether to cancel or postpone the unavailability period, thereby reducing the impact of the unavailability period on the transmission of high priority data and lowering data transmission latency.

In some embodiments, in the DUO mode, the first device 110 may judge whether to control the unavailability period of the first device 110 based on information acquired from the second device 120.

Fig. 4 shows a schematic diagram of a communication process 400 according to some example embodiments of the present disclosure. The communication process 400 shown in Fig. 4 may involve, for example, the first device 110 and the second device 120. For convenience of explanation, the communication process 400 will be described with reference to the example environment shown in Fig. 1.

It should be understood that at least part of the actions performed at the first device 110 in the communication process may also be performed at the second device 120. At least part of the actions performed at the second device 120 may also be performed at the first device 110.

Fig. 4 shows an example scenario using the DUO mode. The first device 110 and the second device 120 may include, for example, devices supporting multi-link operation.

As shown in Fig. 4, the second device 120 may transmit (405) information associated with the unavailability control operation of the first device 110 to the first device 110 with a predetermined frame structure.

In some embodiments, the aforementioned information at least indicates that the second device 120 will transmit first data of a first type in a preset time period.

Fig. 5 shows a schematic diagram of example unavailability control information (i.e., the aforementioned information associated with the unavailability control operation of the first device 110) according to some example embodiments of the present disclosure.

As shown in Fig. 5, in the DUO mode, when the second device 120 polls or requests unavailability from the first device 110 via a Buffer Status Report Poll (BSRP) frame 510 (i.e., an initial control frame), the second device 120 may add a service indication 520 in the BSRP frame 510. The service indication 520 may indicate, for example, data to be transmitted in a transmission queue or the type of data to be transmitted.

In some embodiments, the service indication 520 may indicate the first type of the first data (e.g., game data 530) to be transmitted by the second device 120. Or the service indication 520 may indicate whether the transmission queue of the second device 120 includes low latency data or EPCS data.

In some embodiments, based on the received BSRP frame 510, the first device 110 may transmit a reception response of the BSRP frame 510 via a Multi-STA Block Ack frame 540.

Continuing with reference to Fig. 4, the first device 110 may determine (410) whether to communicate with the second device 120 in the preset time period based on the aforementioned information.

In some embodiments, the first device 110 may determine to communicate with the second device 120 in the preset time period responsive to determining that the first type satisfies a predetermined type.

In some embodiments, the predetermined type includes a data type associated with a low latency service or a data type associated with an emergency preparedness communications service.

In some examples, the low latency service or EPCS service (including EPCS management frames and EPCS traffic) indicated in the service indication 520 may indicate the urgency of the Wi-Fi traffic. The first device 110 may control its unavailability period based on this urgency indication.

In some embodiments, the first device 110 may determine whether to control its unavailability period based on the priority of data to be transmitted by the second device 120 and the priority of data to be transmitted by the first device 110.

In some embodiments, the first device 110 may determine to communicate with the second device 120 in the preset time period, i.e., cancel its unavailability period to communicate with the second device 120, responsive to determining that the first device 110 will transmit second data of a second type in the preset time period, and that a second priority of the second type is lower than a first priority of the first type.

For example, as shown in Fig. 5, the first device 110 will transmit in the preset time period is Bluetooth music data 550, while the second device 120 will transmit in the preset time period is game data 530. At this time, because the priority of the game data 530 is higher than the Bluetooth music data 550, the first device 110 may abandon the transmission of the Bluetooth music data 550.

In some embodiments, the priority of data may be determined according to service type.

For example, the priority of each service type may be as follows:
➢ Priority 1: Voice Service;
➢ Priority 2: Augmented Reality (AR) Service;
➢ Priority 3: Virtual Reality (VR) Service;
➢ Priority 4: Online Game Service;
➢ Priority 5: Live Video Service;
➢ Priority 6: Artificial Intelligence (AI) Chat Service;
➢ Priority 7: Music Service;
➢ Priority 8: Browser Service.

In some embodiments, the specific data priority may be determined based on specific scenarios, and the present disclosure is not limited in this regard. After transmitting the service priority indication as a BSRP frame to the first device 110 in the initial control frame, the first device 110 may compare it with the unavailability activity service priority (e.g., based on the aforementioned service priority ranking). If the fist device 110 judges that the peer service (i.e., the service of the second device 120) has a higher priority, then the first device 110 may cancel or suspend the unavailability service period, and will not report to the peer, but continue to receive high priority data packets from the peer.

In another example, the first device 110 may judge whether to communicate with the second device 120 based on the type of unavailability activity. As shown in Fig. 5, game data 530 is transmitted via Wi-Fi, while Bluetooth music data 550 is transmitted via Bluetooth protocol. If the priority of data transmitted via Wi-Fi (i.e., data type associated with Wi-Fi transmission) is higher than data transmitted via Bluetooth, then the first device 110 may determine to communicate with the second device 120 in the preset time period and abandon Bluetooth data transmission.

In some examples, the priority of activities may be as follows:
➢ Priority 1: Bluetooth;
➢ Priority 2: Cellular Network;
➢ Priority 3: Activity for Receiving (RX) or Transmitting (TX) Wi-Fi Data;
➢ Priority 4: Wi-Fi Peer to Peer (P2P) Tunneled Direct Link Setup (TDLS);
➢ Priority 5: Wi-Fi Off-Channel Scan;

As mentioned above, the priority of Receiving (RX)/Transmitting (TX) for Wi-Fi activities may be negotiated between the second device 120 and the first device 110 or between the second device 120 and the third device 130. The negotiation value (i.e., priority) for Receiving/Transmitting of Wi-Fi activities may be 3, then if there is Bluetooth or cellular service, the first device 110 may report unavailability. Otherwise, the first device 110 should not report unavailability, but should priorities performing Wi-Fi activities.

Returning to Fig. 4, based on the aforementioned priority determination process associated with data types, responsive to determining to communicate with the second device 120 in the preset time period, the first device 110 may receive (415) the first data (e.g., high priority data, or data of high urgency) from the second device 120 in the preset time period.

In some embodiments, the second device 120 may directly control the unavailability period of the first device 110 using a control message. For example, the second device 120 may receive unavailability information of the first device 110 from the first device 110, and transmit unavailability control signaling to the first device 110 based on this information.

Fig. 6 shows a schematic diagram of a communication process 600 according to some example embodiments of the present disclosure. The communication process 600 shown in Fig. 6 may involve, for example, the first device 110 and the second device 120. For convenience of explanation, the communication process 600 will be described with reference to the example environment shown in Fig. 1.

It should be understood that at least part of the actions performed at the first device 110 in the communication process may also be performed at the second device 120. At least part of the actions performed at the second device 120 may also be performed at the first device 110.

Fig. 6 shows a scenario where the second device 120 transmits an unavailability control message to the first device 110 in the DUO mode. The first device 110 and the second device 120 may include, for example, devices supporting multi-link operation.

As shown in Fig. 6, the first device 110 may generate unavailability information of the first device 110. The aforementioned unavailability information at least indicates that the first device 110 will transmit second data of a second type in a preset time period.

In some embodiments, within a transmission opportunity of the first device 110 (or within a transmission opportunity of the second device 120), the first device 110 may transmit (605) unavailability information to the second device 120 with another predetermined frame structure.

In some embodiments, the aforementioned unavailability information may be transmitted to the second device 120 via a Multi-STA Block Ack frame or a Buffer Status Report Poll initial control frame or a Multi-User Request to Send frame.

In some embodiments, the second device 120 may generate information associated with the unavailability control operation responsive to determining that the second priority of the second type is lower than the first priority of the first type. The aforementioned information further includes an indication requesting the first device 110 to communicate with the second device 120 in the preset time period. In some examples, this indication may also be referred to as a control message (or unavailability control message), which indicates the first device 110 to cancel its unavailability period within the preset time period.

In some embodiments, if the second device 120 receives unavailability information in a Multi-STA Block Ack frame, the second device 120 may transmit another initial control frame (e.g., a BSRP frame) to indicate the unavailability control information in a User Info field.

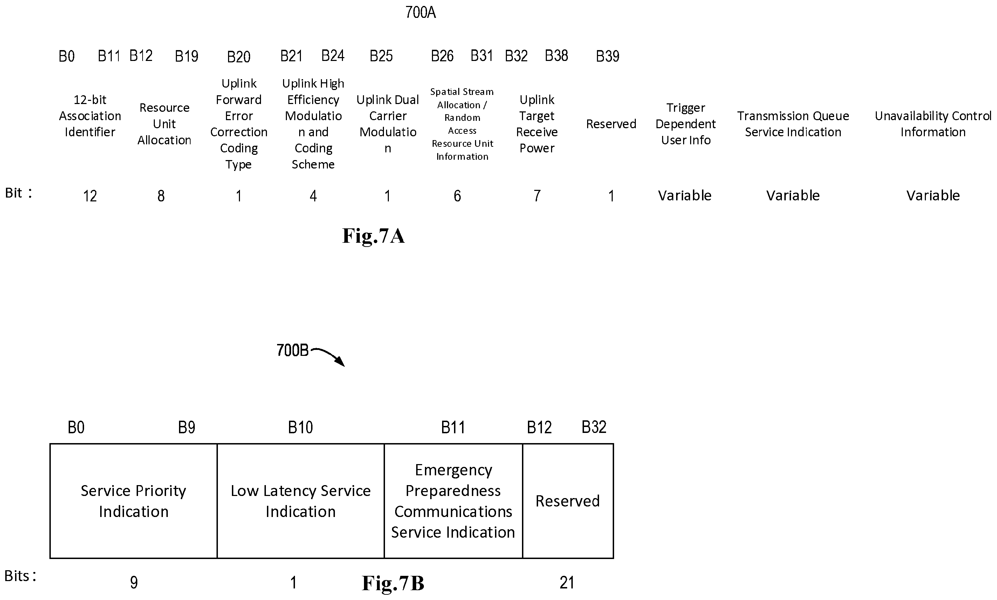

Fig. 7A shows a User Info field 700A including an indication (i.e., unavailability control message) according to some example embodiments of the present disclosure. The User Info field 700A may be included in an initial control frame (e.g., a BSRP frame or a Multi-User Request to Send frame). As shown in Fig. 7A, the User Info field 700A may include the following information:
➢ 12-bit Association Identifier: used to uniquely identify an association relationship between a device and an Access Point (AP);
➢ Resource Unit Allocation: indicates the allocation method of transmission resources;
➢ Uplink Forward Error Correction Coding Type: indicates the type of coding used for error correction during data transmission;
➢ Uplink High Efficiency Modulation and Coding Scheme: indicates the modulation and coding scheme used during data transmission;
➢ Uplink Dual Carrier Modulation: indicates whether uplink dual carrier modulation is adopted in this data transmission process;
➢ Spatial Stream Allocation/Random Access Resource Unit Information: indicates the number of spatial streams allocated by the Access Point (AP) for each Terminal Equipment (STA) and information associated with uplink transmission acquiring Resource Units (RU) based on a contention method;
➢ Uplink Target Receive Power: indicates parameters for power control optimizing uplink transmission;
➢ Reserved: indicates that this bit is reserved to indicate other information;
➢ Trigger Dependent User Info: indicates information used for scheduling uplink transmission in a Trigger Frame;
➢ Transmission Queue Service Indication: indicates the data type or data urgency etc. in the transmission queue of the second device 120;
➢ Unavailability Control Information: used to control the unavailability period of the first device 110.

Fig. 7B shows fields 700B in a Transmission Queue Service Indication according to some example embodiments of the present disclosure. The field 700B may be included in the User Info field 700A to indicate the type or urgency of data in the transmission queue of the second device 120. As shown in Fig. 7B, the field 700B may include the following information:
➢ Service Priority Indication: indicates the priority of the service or data;
➢ Low Latency Service Indication: indicates whether the service or data is a low latency service or data;
➢ Emergency Preparedness Communications Service Indication: indicates whether the service or data is an EPCS service or EPCS data;
➢ Reserved: indicates that this bit is reserved to indicate other information.

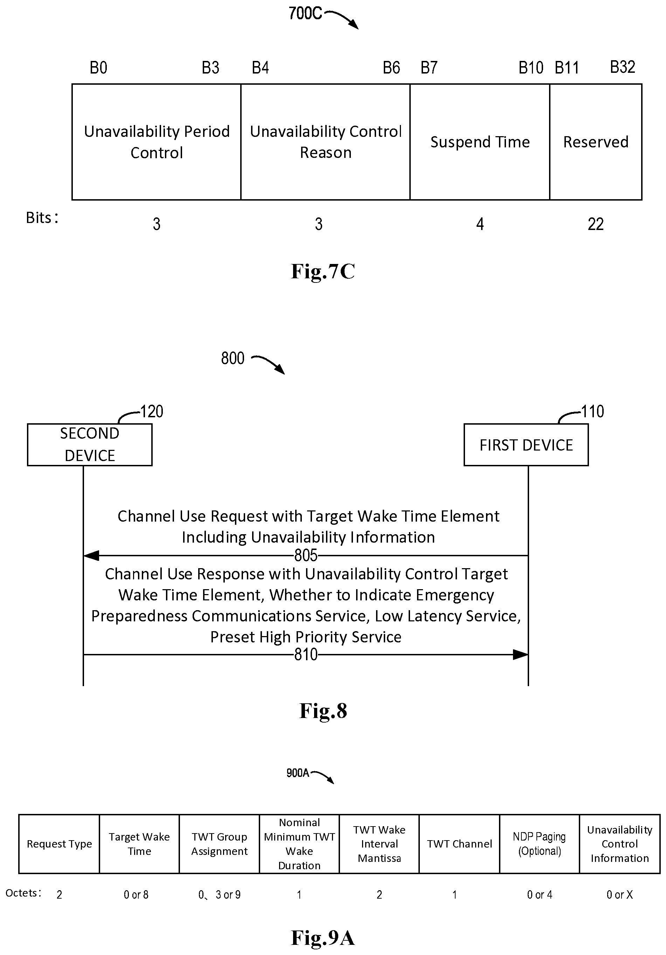

Fig. 7C shows fields 700C in Unavailability Control Information according to some example embodiments of the present disclosure. The field 700C may be included in the User Info field 700A to control the unavailability period of the first device 110. As shown in Fig. 7C, the field 700C may include the following information:
➢ Unavailability Period Control: indicates the control type causing a change in the unavailability event of the first device 110. Wherein the control type includes a Teardown control type and a Suspend control type, and other values in this field may be reserved to indicate other events;
➢ Unavailability Control Reason: indicates the unavailability control reason indicated by the second device 120, wherein 0 indicates unavailability control based on priority service (i.e., there is high priority service data waiting to be transmitted or the second device 120 will transmit high priority data), 1 indicates unavailability control based on low latency service (i.e., the second device 120 will transmit data associated with a low latency service), 2 indicates unavailability control based on EPCS service (i.e., the second device 120 will transmit data associated with EPCS);
➢ Suspend Time: indicates the unavailability activity suspend time from the reported unavailability start time, i.e., the unavailability duration of the first device 110, wherein the unavailability duration includes the suspend duration associated with the suspend control type;
➢ Reserved: indicates that this bit is reserved to indicate other information.

Returning to Fig. 6, in some embodiments, the second device 120 may transmit (610) the information including the indication to the first device 110.

In some examples, in the DUO mode, if the first device 110 directly reports unavailability information to the second device 120 via an unsolicited method (i.e., without the second device 120 requesting the first device 110, the first device 110 directly reports to the second device 120), then the second device 120 may compare the priority of services of the first device 110 within the DUO period with the priority of services in the transmission queue of the second device 120. If the second device 120 confirms that the priority of services in the transmission queue is higher, then the second device 120 may transmit a DUO control message to the first device 110. Alternatively, or additionally, the second device 120 may directly transmit a DUO control message to the first device 110 based on low latency or EPCS services in its transmission queue.

In some embodiments, the second device 120 may transmit the information including the indication (i.e., unavailability control message) to the first device 110 via a Buffer Status Report Poll initial control frame or a Multi-User Request to Send frame.

In some embodiments, based on the information acquired from the second device 120, responsive to determining that the received information associated with the unavailability control operation further includes an indication requesting the first device 110 to communicate with the second device 120 in the preset time period (i.e., unavailability control message), the first device 110 may determine whether to communicate with the second device 120 in the preset time period.

In some embodiments, the first device 110 may transmit (615) a response message indicating whether the first device 110 agrees to communicate with the second device 120 in the preset time period to the second device 120 within a transmission opportunity of the second device 120 based on the aforementioned determination.

In some embodiments, the aforementioned response message is transmitted to the second device 120 via a Multi-STA Block Ack frame or a Buffer Status Report Poll initial control frame or a Multi-User Request to Send frame.

In the scenario shown in Fig. 6, in the DUO mode, the first device 110 or the second device 120 can directly add a Transmission Queue Service Indication in an initial control frame (e.g., BSRP frame or Multi-User Request to Send frame) and an Initial Control Response (ICR) (e.g., Multi-STA Block Ack/Clear to Send (CTS)) to enable the peer to manage unavailability activities. In the aforementioned process, multiple negotiating Access Points (e.g., second device 120 and third device 130) may also mutually transmit information associated with the unavailability control operation and a response message indicating whether to receive unavailability control.

In this way, devices in the network can accurately and quickly determine unavailability control instructions based on unavailability information of other devices, thereby improving the efficiency of the control flow.

Fig. 8 shows a schematic diagram of a communication process 800 according to some example embodiments of the present disclosure. The communication process 800 shown in Fig. 8 may involve, for example, the first device 110 and the second device 120. For convenience of explanation, the communication process 800 will be described with reference to the example environment shown in Fig. 1.

It should be understood that at least part of the actions performed at the first device 110 in the communication process may also be performed at the second device 120. At least part of the actions performed at the second device 120 may also be performed at the first device 110.

Fig. 8 shows a scenario where the second device 120 transmits an unavailability control message to the first device 110 in the PUO mode. The first device 110 and the second device 120 may include, for example, devices supporting multi-link operation.

As shown in Fig. 8, the first device 110 may transmit (805) unavailability information to the second device 120 via a Target Wakeup Time (TWT) element with a specific frame including a channel use request.

In some embodiments, the aforementioned Target Wakeup Time element comprises at least a peer-to-peer Target Wakeup Time element and a broadcast Target Wakeup Time element.

In some embodiments, in the PUO mode, if the first device 110 transmits unavailability information to the second device 120 in a channel use message, then the second device 120 may check its transmission queue, the second device 120 may compare the priority of services reported by the first device 110 with the priority of services in the transmission queue and transmit a PUO control message to the first device 110. Or, if there is low latency data or EPCS service data in the transmission queue, the second device 120 may directly transmit a PUO control message to the first device 110. In some examples, the PUO control message may periodically control the unavailability period of the first device 110.

In some embodiments, the second device 120 may transmit (810) information including an indication (i.e., unavailability control message) to the first device 110 with a specific frame via a Target Wakeup Time element. For example, the second device 120 may transmit a channel use response including a TWT element to the first device 110. The TWT element may indicate information associated with the unavailability control operation.

In some embodiments, detailed unavailability control information may be indicated in a single TWT Parameter Set field.

Fig. 9A shows a single TWT Parameter Set field 900A according to some example embodiments of the present disclosure. As shown in Fig. 9A, the single TWT Parameter Set field may include the following information:
➢ Request Type: indicates the specific type of TWT request;
➢ Target Wake Time: indicates the target wake time of the device;
➢ TWT Group Assignment: indicates the TWT group to which the device belongs;
➢ Nominal Minimum TWT Wake Duration: indicates the minimum time the device remains awake in a TWT session;
➢ TWT Wake Interval Mantissa: used to calculate the wake interval time of the device;
➢ TWT Channel: indicates the channel used by the device in a TWT session;
➢ NDP (Null Data Packet) Paging (Optional): indicates whether NDP paging function is supported or enabled;
➢ Unavailability Control Information: indicates the unavailability control information (or unavailability control message) transmitted by the second device 120 to the first device 110.

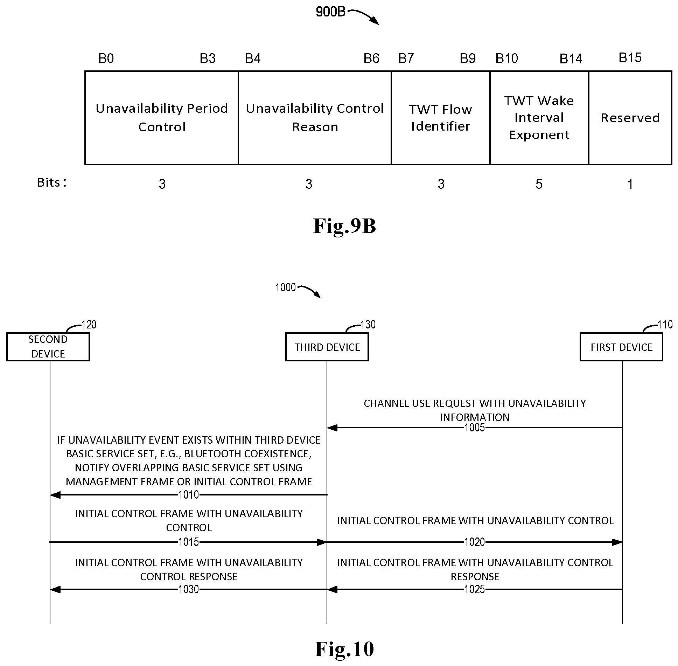

Fig. 9B shows an Unavailability Control Information field 900B according to some example embodiments of the present disclosure. This field may be included in the single TWT Parameter Set field 900A to indicate detailed unavailability control information or unavailability control message. As shown in Fig. 9B, the Unavailability Control Information field 900B may include the following information:
➢ Unavailability Period Control: indicates the control type causing a change in the unavailability event of the first device 110. Wherein the control type includes a Teardown control type and a Suspend control type, and other values in this field may be reserved to indicate other events;
➢ Unavailability Control Reason: indicates the unavailability control reason indicated by the second device 120, wherein 0 indicates unavailability control based on priority service (i.e., there is high priority service data waiting to be transmitted or the second device 120 will transmit high priority data), 1 indicates unavailability control based on low latency service (i.e., the second device 120 will transmit data associated with a low latency service), 2 indicates unavailability control based on EPCS service (i.e., the second device 120 will transmit data associated with EPCS);
➢ TWT Flow Identifier: used to uniquely identify a TWT session established between a device (STA) and an Access Point (AP);
➢ TWT Wake Interval Exponent: used to define the exponent part of the device wake interval;
➢ Reserved: indicates that this bit is reserved to indicate other information.

In some embodiments, in the PUO mode, unavailability signaling including unavailability information may be transmitted from one Basic Service Set (BSS) to an Overlapping Basic Service Set (OBSS).

Fig. 10 shows a schematic diagram of a communication process 1000 according to some example embodiments of the present disclosure. The communication process 1000 shown in Fig. 10 may involve, for example, the first device 110, the second device 120 and the third device 130. For convenience of explanation, the communication process 1000 will be described with reference to the example environment shown in Fig. 1.

It should be understood that at least part of the actions performed at the first device 110 in the communication process may also be performed at the second device 120 and/or the third device 130. At least part of the actions performed at the second device 120 may also be performed at the first device 110 and/or the third device 130.

Fig. 10 shows a scenario where unavailability information is shared between multiple devices. In this scenario, the first device 110 may transmit unavailability information of the first device 110 to the second device 120 via the third device 130 and the third device 130 may forward the unavailability control message from the second device 120 to the first device 110.

As shown in Fig. 10, the first device 110 may generate unavailability information of the first device 110. The aforementioned unavailability information at least indicates that the first device 110 will transmit second data of a second type in a preset time period.

In some embodiments, the first device 110 may transmit (1005) unavailability information to the third device 130 via an initial control frame or a management frame. In some examples, if the third device 130 or the first device 110 has unavailability activity signaling (including information regarding unavailability caused by some unavailability activities), these signaling may be transmitted by the third device 130 to the second device 120.

In some examples, the third device 130 may receive unavailability information of the first device 110 from the first device 110 via a Target Wakeup Time element with a specific frame including a channel use request. The aforementioned Target Wakeup Time element comprises at least a peer-to-peer Target Wakeup Time element and a broadcast Target Wakeup Time element.

In some embodiments, the third device 130 may transmit (1010) unavailability information of the first device 110 to the second device 120 via a management frame or an initial control frame. The aforementioned management frame may include a broadcast management frame. For example, the third device 130 may include a device within a Basic Service Set, and the second device 120 may include a device within an Overlapping Basic Service Set. The third device 130 may notify devices within the Overlapping Basic Service Set regarding information of unavailability events (e.g., existence of unavailability events due to Bluetooth coexistence) via a management frame or an initial control frame.

In some embodiments, based on the received unavailability information of the first device 110 and data in its own transmission queue, the second device 120 may judge whether to transmit an unavailability control message to the first device 110.

In some embodiments, the second device 120 may generate information associated with the unavailability control operation of the first device 110 responsive to determining that the second priority of the second type is lower than the first priority of the first type. This information further includes an indication requesting the first device 110 to communicate with the second device 120 in the preset time period.

In some embodiments, the second device 120 may transmit the information including the indication to the first device 110 via the third device 130 based on an initial control frame or a management frame. The aforementioned management frame may include a beacon frame and a channel use request.

For example, the second device 120 may transmit (1015) information including the aforementioned indication (i.e., unavailability control message) to the third device 130 via a management frame or a control frame.

Based on the received information, the third device 130 may transmit (1020) information including the aforementioned indication (i.e., unavailability control message) to the first device 110 via an initial control frame or a management frame. This management frame includes a beacon frame and a channel use request.

In some embodiments, the first device 110 may determine whether to communicate with the second device 120 in the preset time period responsive to determining that the received information associated with the unavailability control operation further includes an indication requesting the first device 110 to communicate with the second device 120 in the preset time period.

For example, based on the received information, the first device 110 may judge whether to agree to this indication. The first device 110 may indicate via a response message whether it agrees to communicate with the second device 120 in the preset time period.

In some embodiments, the first device 110 may transmit (1025) a response message indicating whether the first device 110 agrees to communicate with the second device 120 in the preset time period to the third device 130 via an initial control frame or a management frame based on the aforementioned determination.

In some embodiments, the second device 120 may receive (1030) the response message indicating whether the first device 110 agrees to communicate with the second device 120 in the preset time period from the third device 130 via an initial control frame or a management frame.

Based on the aforementioned process, unavailability information may be shared between multiple devices, and unavailability control messages may be transmitted between multiple devices. In this way, embodiments of the present disclosure can increase the transmission efficiency of unavailability messages and unavailability control messages, achieving higher transmission rates.

In some embodiments, the aforementioned transmission process of unavailability information and unavailability control messages and the unavailability period control process may also be performed between multiple stations or between multiple access points. Furthermore, a station may also receive unavailability information of an access point from the access point and transmit an unavailability control message to the access point.

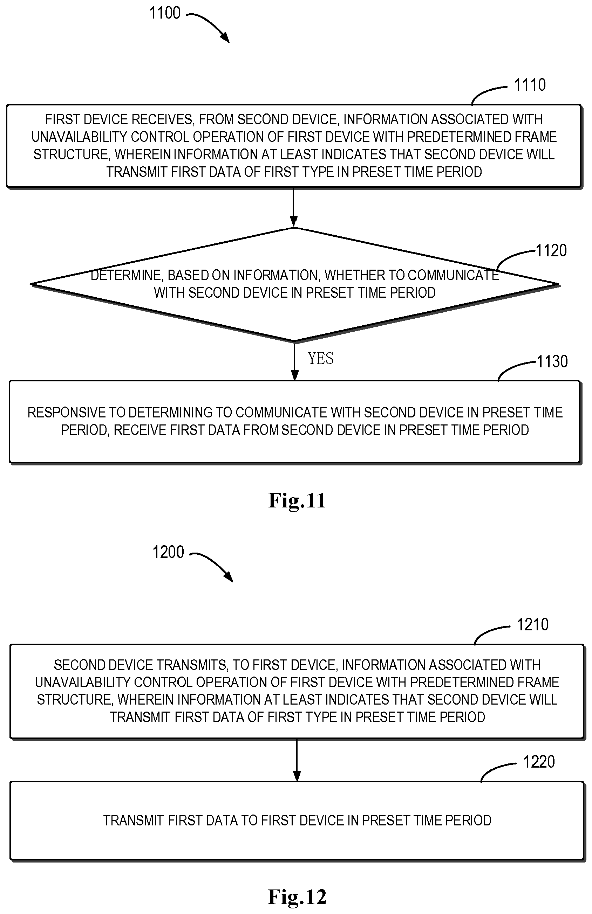

Fig. 11 shows a flowchart of a communication method according to some example embodiments of the present disclosure. The method 1100 may be implemented at the first device 110, for example.

In block 1110, the first device 110 receives, from a second device, information associated with an unavailability control operation of the first device with a predetermined frame structure, wherein the information at least indicates that the second device will transmit first data of a first type in a preset time period.

In block 1120, the first device 110 determines, based on the information, whether to communicate with the second device in the preset time period.

In block 1130, the first device 110, responsive to determining to communicate with the second device in the preset time period, receives the first data from the second device in the preset time period.

In some example embodiments, determining whether to communicate with the second device in the preset time period comprises: responsive to determining that the first type satisfies a predetermined type, determining to communicate with the second device in the preset time period.

In some example embodiments, wherein the predetermined type comprises: a data type associated with a low latency service; or a data type associated with an emergency preparedness communications service.

In some example embodiments, determining whether to communicate with the second device in the preset time period comprises: responsive to determining that the first device will transmit second data of a second type in the preset time period, and that a second priority of the second type is lower than a first priority of the first type, determining to communicate with the second device in the preset time period.

In some example embodiments, the method 1100 further comprises: generating unavailability information of the first device, wherein the unavailability information at least indicates that the first device will transmit second data of a second type in the preset time period; transmitting the unavailability information to the second device with another predetermined frame structure within a transmission opportunity of the first device; responsive to determining that the received information associated with the unavailability control operation further includes an indication requesting the first device to communicate with the second device in the preset time period, determining whether to communicate with the second device in the preset time period; and based on the determination, transmitting a response message indicating whether the first device agrees to communicate with the second device in the preset time period to the second device within a transmission opportunity of the second device.

In some example embodiments, the unavailability information and the response message are transmitted to the second device via a Multi-STA Block Ack frame or a Buffer Status Report Poll initial control frame or a Multi-User Request to Send frame.

In some example embodiments, the method 1100 further comprises: receiving the information including the indication from the second device via a Buffer Status Report Poll initial control frame or a Multi-User Request to Send frame.

In some example embodiments, the method 1100 further comprises: transmitting the unavailability information to the second device via a Target Wakeup Time element with a specific frame including a channel use request, wherein the Target Wakeup Time element comprises at least a peer-to-peer Target Wakeup Time element and a broadcast Target Wakeup Time element.

In some example embodiments, the method 1100 further comprises: receiving the information including the indication from the second device via the Target Wakeup Time element with the specific frame.

In some example embodiments, the method further comprises: transmitting a capability report to the second device via a management frame, the capability report indicating whether the first device supports an unavailability control mode.

In some example embodiments, the unavailability control mode comprises at least one of the following: a periodic unavailability operation mode; a dynamic unavailability operation mode; a limited operation mode; an unavailability operation mode based on a priority threshold.

In some example embodiments, the method 1100 further comprises: generating unavailability information of the first device, wherein the unavailability information at least indicates that the first device will transmit second data of a second type in the preset time period; transmitting the unavailability information to a third device via an initial control frame or a management frame; receiving the information from the second device via the third device based on the initial control frame or the management frame, wherein the management frame includes a beacon frame and a channel use request; and responsive to determining that the received information associated with the unavailability control operation further includes an indication requesting the first device to communicate with the second device in the preset time period, determining whether to communicate with the second device in the preset time period; and based on the determination, transmitting a response message indicating whether the first device agrees to communicate with the second device in the preset time period to the third device via an initial control frame.

In some example embodiments, the information further comprises at least one of the following: a service priority indication; a low latency service indication; an emergency preparedness communications service indication.

In some example embodiments, the information further comprises: a control type causing a change in the unavailability event of the first device, wherein the control type includes a teardown control type and a suspend control type; an unavailability control reason indicated by the second device; an unavailability duration of the first device, wherein the unavailability duration includes a suspend duration associated with the suspend control type.

In some example embodiments, the unavailability control reason comprises: the second device will transmit high priority data; the second device will transmit data associated with the low latency service; the second device will transmit data associated with the emergency preparedness communications service.

In some example embodiments, the first device comprises a terminal equipment or a network equipment, the second device comprises the network equipment or the terminal equipment, the at least one third device comprises the terminal equipment or the network equipment, and wherein the first device, the second device and the at least one third device comprise devices supporting multi-link operation.

Fig. 12 shows a flowchart of a communication method according to some example embodiments of the present disclosure. The method 1200 may be implemented at the second device 120, for example.

In block 1210, the second device 120 transmits, to a first device, information associated with an unavailability control operation of the first device with a predetermined frame structure, wherein the information at least indicates that the second device will transmit first data of a first type in a preset time period.

In block 1220, the second device 120 transmits the first data to the first device in the preset time period.

In some example embodiments, the method 1200 further comprises: receiving unavailability information of the first device from the first device with another predetermined frame structure within a transmission opportunity of the first device, wherein the unavailability information at least indicates that the first device will transmit second data of a second type in the preset time period; responsive to determining that a second priority of the second type is lower than a first priority of the first type, generating information associated with the unavailability control operation, wherein the information further includes an indication requesting the first device to communicate with the second device in the preset time period; and transmitting the information including the indication to the first device.

In some example embodiments, transmitting the first data to the first device comprises: receiving a response message for the indication from the first device via a Multi-STA Block Ack frame within a transmission opportunity of the second device; and responsive to determining that the response message indicates that the first device agrees to communicate with the second device in the preset time period, transmitting the first data to the first device in the preset time period.

In some example embodiments, the unavailability information and the response message are received from the first device via a Multi-STA Block Ack frame or a Buffer Status Report Poll initial control frame or a Multi-User Request to Send frame.

In some example embodiments, the method 1200 further comprises: transmitting the information including the indication to the first device via a Buffer Status Report Poll initial control frame or a Multi-User Request to Send frame.

In some example embodiments, the method 1200 further comprises: receiving the unavailability information from the first device via a Target Wakeup Time element with a specific frame including a channel use request, wherein the Target Wakeup Time element comprises at least a peer-to-peer Target Wakeup Time element and a broadcast Target Wakeup Time element.

In some example embodiments, the method 1200 further comprises: transmitting the information including the indication to the first device via the Target Wakeup Time element with the specific frame.

In some example embodiments, the method 1200 further comprises: receiving a capability report from the first device via a management frame, the capability report indicating whether the first device supports an unavailability control mode.

In some example embodiments, the unavailability control mode comprises at least one of the following: a periodic unavailability operation mode; a dynamic unavailability operation mode; a limited operation mode; an unavailability operation mode based on a priority threshold.

In some example embodiments, the method 1200 further comprises: receiving unavailability information of the first device from a third device via a management frame or an initial control frame, wherein the unavailability information at least indicates that the first device will transmit second data of a second type in the preset time period; responsive to determining that a second priority of the second type is lower than a first priority of the first type, generating information associated with the unavailability control operation of the first device, wherein the information further includes an indication requesting the first device to communicate with the second device in the preset time period; transmitting the information including the indication to the first device via the third device based on the initial control frame or the management frame, wherein the management frame includes a beacon frame and a channel use request; and receiving a response message indicating whether the first device agrees to communicate with the second device in the preset time period from the third device via an initial control frame.

In some example embodiments, the information further comprises at least one of the following: a service priority indication; a low latency service indication; an emergency preparedness communications service indication.

In some example embodiments, the information further comprises: a control type causing a change in the unavailability event of the first device, wherein the control type includes a teardown control type and a suspend control type; an unavailability control reason indicated by the second device; an unavailability duration of the first device, wherein the unavailability duration includes a suspend duration associated with the suspend control type.

In some example embodiments, the unavailability control reason comprises: the second device will transmit high priority data; the second device will transmit data associated with the low latency service; the second device will transmit data associated with the emergency preparedness communications service.

In some example embodiments, the method 1200 further comprises: exchanging capability negotiation information with a third device via a management frame, the capability negotiation information indicating that the second device and the third device possess the capability to share information associated with the unavailability control operation of the first device, wherein the information at least indicates that the second device will transmit first data of a first type in the preset time period, the management frame includes a beacon frame and a public action frame.

In some example embodiments, the first device comprises a terminal equipment or a network equipment, the second device comprises the network equipment or the terminal equipment, the third device comprises the terminal equipment or the network equipment, and wherein the first device, the second device and the third device comprise devices supporting multi-link operation.

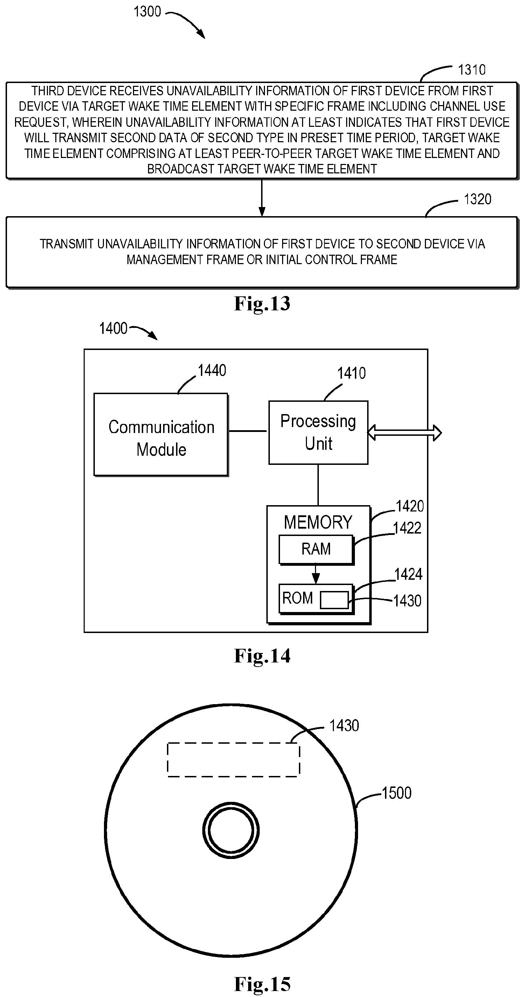

Fig. 13 shows a flowchart of a communication method according to some example embodiments of the present disclosure. The method 1300 may be implemented at the third device 130, for example.

In block 1310, the third device 130 receives unavailability information of the first device from the first device via a Target Wakeup Time element with a specific frame including a channel use request, wherein the unavailability information at least indicates that the first device will transmit second data of a second type in a preset time period, the Target Wakeup Time element comprising at least a peer-to-peer Target Wakeup Time element and a broadcast Target Wakeup Time element.

In block 1320, the third device 130 transmits the unavailability information of the first device to a second device via a management frame or an initial control frame.

In some example embodiments, the method 1300 further comprises: receiving information associated with the unavailability control operation of the first device from the second device, wherein the information further includes an indication requesting the first device to communicate with the second device in the preset time period; transmitting the information including the indication to the first device via an initial control frame or a management frame, the management frame includes a beacon frame and a channel use request.

In some example embodiments, the method 1300 further comprises: receiving a response message indicating whether the first device agrees to communicate with the second device in the preset time period from the first device via an initial control frame; and transmitting the response message to the second device via an initial control frame.

In some example embodiments, the method 1300 further comprises: exchanging capability negotiation information with the second device via a management frame, the capability negotiation information indicating that the second device and the third device possess the capability to share information associated with the unavailability control operation of the first device, wherein the information at least indicates that the second device will transmit first data of a first type in the preset time period, the management frame includes a beacon frame and a public action frame.

In some example embodiments, the method 1300 further comprises: receiving a capability report from the first device via a management frame, the capability report indicating whether the first device supports an unavailability control mode.

In some example embodiments, the unavailability control mode comprises at least one of the following: a periodic unavailability operation mode; a dynamic unavailability operation mode; a limited operation mode; an unavailability operation mode based on a priority threshold.

In some example embodiments, the information further comprises at least one of the following: a service priority indication; a low latency service indication; an emergency preparedness communications service indication.

In some example embodiments, the information further comprises: a control type causing a change in the unavailability event of the first device, wherein the control type includes a teardown control type and a suspend control type; an unavailability control reason indicated by the second device; an unavailability duration of the first device, wherein the unavailability duration includes a suspend duration associated with the suspend control type.

In some example embodiments, the unavailability control reason comprises: the second device will transmit high priority data; the second device will transmit data associated with the low latency service; the second device will transmit data associated with the emergency preparedness communications service.

In some example embodiments, the first device comprises a terminal equipment or a network equipment, the second device comprises the network equipment or the terminal equipment, the third device comprises the terminal equipment or the network equipment, and wherein the first device, the second device and the third device comprise devices supporting multi-link operation.

In some example embodiments, an apparatus for communication may comprise means for performing corresponding steps of the method 1100. These means may be implemented in any suitable manner. For example, the means may be implemented as circuitry or software modules.

The apparatus for communication may comprise: means for receiving, with a predetermined frame structure, information associated with an unavailability control operation of the first device from a second device, wherein the information at least indicates that the second device will transmit first data of a first type in a preset time period; means for determining, based on the information, whether to communicate with the second device in the preset time period; and means for receiving, responsive to determining to communicate with the second device in the preset time period, the first data from the second device in the preset time period.

In some example embodiments, an apparatus for communication may comprise means for performing corresponding steps of the method 1200. These means may be implemented in any suitable manner. For example, the means may be implemented as circuitry or software modules.

The apparatus for communication may comprise: means for transmitting, with a predetermined frame structure, information associated with an unavailability control operation of the first device to a first device, wherein the information at least indicates that the second device will transmit first data of a first type in a preset time period; and means for transmitting the first data to the first device in the preset time period.

In some example embodiments, an apparatus for communication may comprise means for performing corresponding steps of the method 1300. These means may be implemented in any suitable manner. For example, the means may be implemented as circuitry or software modules.

The apparatus for communication may comprise: means for receiving unavailability information of the first device from the first device via a Target Wakeup Time element with a specific frame including a channel use request, wherein the unavailability information at least indicates that the first device will transmit second data of a second type in a preset time period, the Target Wakeup Time element comprising at least a peer-to-peer Target Wakeup Time element and a broadcast Target Wakeup Time element; and means for transmitting the unavailability information of the first device to a second device via a management frame or an initial control frame.

Fig. 14 is a simplified block diagram of a device 1400 suitable for implementing the example embodiments of the present disclosure. The device 1400 may be used to implement the first device 110 and/or the second device 120 and/or the third device 130 in the communication network 100. As shown, the device 1400 includes one or more processing units 1410, one or more memories 1420 coupled to the processing units 1410, and a communication module 1440 coupled to the processing units 1410.

The communication module 1440 is used for bidirectional communication. In some example embodiments, the communication module 1440 may have at least one antenna to facilitate communication. In some example embodiments, the communication module 1440 may have one or more communication interfaces. The communication interfaces may represent any interface required for communicating with other network elements.

The processing units 1410 may be of any type suitable for local technical networks, and may include but are not limited to general purpose computers, special purpose computers, microcontrollers, Digital Signal Controllers (DSPs), and one or more based on controller multi-core controller architectures. The device 1400 may have multiple processors, such as Application Specific Integrated Circuit chips, which are subordinate in time to a clock synchronized with a main processor.

The memory 1420 may include one or more non-volatile memories and one or more volatile memories. Examples of non-volatile memories include but are not limited to Read Only Memory (ROM) 1424, Erasable Programmable Read Only Memory (EPROM), flash memory, hard disks, Compact Discs (CD), Digital Video Discs (DVD) and other magnetic storage and/or optical storage. Examples of volatile memories include but are not limited to Random Access Memory (RAM) 1422 and other volatile memories that do not persist during a power outage duration.

A computer program 1430 includes computer executable instructions executed by the associated processing units 1410. The computer program 1430 may be stored in the ROM 1424. The processing units 1410 may perform any suitable actions and processes by loading the computer program 1430 into the RAM 1422.

The example embodiments of the present disclosure may be implemented by means of the computer program 1430, so that the device 1400 may perform any process of the present disclosure as discussed with reference to Figs. 2 to 13. The example embodiments of the present disclosure may also be implemented via hardware or via a combination of software and hardware.

In some example embodiments, the computer program 1430 may be tangibly contained in a computer readable medium, which computer readable medium may be included in the device 1400 (such as in the memory 1420) or other storage devices accessible by the device 1400. The computer program 1430 may be loaded into the RAM 1422 from the computer readable medium for execution. The computer readable medium may include any type of tangible non-volatile memory, such as ROM, EPROM, flash memory, hard disks, CD, DVD, etc. Fig. 15 shows an example of a computer readable medium 1500 in the form of a CD or DVD according to some example embodiments of the present disclosure. The computer program 1430 is stored on the computer readable medium 1500.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of the example embodiments of the present disclosure are shown and described as block diagrams, flowcharts or using some other pictorial representation, it should be understood that the blocks, apparatus, systems, techniques or methods described herein may be implemented as, by way of non-limiting example, hardware, software, firmware, special purpose circuits or logic, general purpose hardware or controllers or other computing devices, or some combination thereof.

The present disclosure also provides at least one computer program product tangibly stored on a computer readable storage medium. In some example embodiments, the computer readable storage medium may be non-transitory. The computer program product includes computer executable instructions, such as instructions included in program modules, which are executed in a device on a real or virtual processor of a target, to perform the method 1100 of Fig. 11 or the method 1200 of Fig. 12 or the method 1300 of Fig. 13 as described above. Generally, program modules include routines, program, libraries, objects, classes, components, data structures, etc. that perform particular tasks or implement particular abstract data types. In various embodiments, the functionality of the program modules may be combined or split between program modules as needed. Machine executable instructions for the program modules may be executed within a local or distributed device. In a distributed device, program modules may be located in both local and remote storage media.

Computer program code for implementing the methods of the present disclosure may be written in one or more programming languages. These computer program codes may be provided to processors of general-purpose computers, special purpose computers or other programmable data processing apparatuses, such that the program code, when executed by the computer or other programmable data processing apparatuses, causes the functions/operations specified in the flowcharts and/or block diagrams to be implemented. The program code may execute entirely on the computer, partly on the computer, as a stand-alone software package, partly on the computer and partly on a remote computer, or entirely on the remote computer or server.

In the context of the present disclosure, computer program code or related data may be carried by any suitable carrier, so that a device, apparatus or processor can perform the various processes and operations described above. Examples of carriers include signals, computer readable media, etc. Examples of signals may include electrical, optical, radio, sound or other forms of propagated signals, such as carrier waves, infrared signals, etc.

A computer readable medium may be any tangible medium that contains or stores a program for or related to an instruction execution system, apparatus or device. A computer readable medium may be a computer readable signal medium or a computer readable storage medium. A computer readable medium may include but is not limited to electronic, magnetic, optical, electromagnetic, infrared or semiconductor systems, apparatuses or devices, or any suitable combination thereof. More detailed examples of computer readable storage media include electrical connections with one or more wires, portable computer disks, hard disks, Random Access Memory (RAM), Read Only Memory (ROM), Erasable Programmable Read Only Memory (EPROM or flash memory), optical storage devices, magnetic storage devices, or any suitable combination thereof.

Furthermore, although operations of the methods of the present disclosure are described in a specific order in the drawings, this does not require or imply that these operations must be performed in this specific order, or that all shown operations must be performed to achieve desirable results. Conversely, the steps depicted in the flowcharts may change the execution order. Additionally, or alternatively, certain steps may be omitted, multiple steps combined into one step executed, and/or one step decomposed into multiple steps executed. It should also be noted that features and functions of two or more devices according to the present disclosure may be embodied in one device. Conversely, features and functions of one device described above may be further divided into being embodied by multiple devices.

Although the present disclosure has been described with reference to several specific embodiments, it should be understood that the present disclosure is not limited to the specific embodiments disclosed. The present disclosure is intended to cover various modifications and equivalent arrangements included within the spirit and scope of the appended claims.

## Claims

1. A method for communication, comprising:
receiving, by a first device (110) from a second device (120), information associated with an unavailability control operation of the first device (110) with a predetermined frame structure, wherein the information at least indicates that the second device (120) will transmit first data of a first type in a preset time period;
determining, based on the information, whether to communicate with the second device (120) in the preset time period; and
responsive to determining to communicate with the second device (120) in the preset time period, receiving the first data from the second device (120) in the preset time period.

2. The method according to claim 1, wherein determining whether to communicate with the second device (120) in the preset time period comprises at least one of:
responsive to determining that the first type satisfies a predetermined type, determining to communicate with the second device (120) in the preset time period, wherein the predetermined type comprises a data type associated with a low latency service or a data type associated with an emergency preparedness communications service; or
responsive to determining that the first device (110) will transmit second data of a second type in the preset time period, and that a second priority of the second type is lower than a first priority of the first type, determining to communicate with the second device (120) in the preset time period.

3. The method according to any one of claims 1-2, further comprising:
generating unavailability information of the first device (110), wherein the unavailability information at least indicates that the first device (110) will transmit second data of a second type in the preset time period;
transmitting the unavailability information to the second device (120) with another predetermined frame structure within a transmission opportunity of the first device (110), wherein the unavailability information is transmitted via a Multi-STA Block Ack frame or a Buffer Status Report Poll initial control frame or a Multi-User Request to Send frame or via a Target Wakeup Time element with a specific frame including a channel use request, wherein the Target Wakeup Time element comprises at least a peer-to-peer Target Wakeup Time element and a broadcast Target Wakeup Time element;
responsive to determining that the received information associated with the unavailability control operation further includes an indication requesting the first device (110) to communicate with the second device (120) in the preset time period, determining whether to communicate with the second device (120) in the preset time period; and
based on the determination, transmitting a response message indicating whether the first device (110) agrees to communicate with the second device (120) in the preset time period to the second device (120) within a transmission opportunity of the second device (120).

4. The method according to any one of claims 1-3, further comprising:
transmitting a capability report to the second device (120) via a management frame, the capability report indicating whether the first device (110) supports an unavailability control mode, wherein the unavailability control mode comprises at least one of: a periodic unavailability operation mode;
a dynamic unavailability operation mode; a limited operation mode; or an unavailability operation mode based on a priority threshold.

5. The method according to any one of claims 1-4, further comprising:
generating unavailability information of the first device (110), wherein the unavailability information at least indicates that the first device (110) will transmit second data of a second type in the preset time period;
transmitting the unavailability information to a third device (130) via an initial control frame or a management frame;
receiving the information from the second device (120) via the third device (130) based on the initial control frame or the management frame, wherein the management frame includes a beacon frame and a channel use request; and
responsive to determining that the received information associated with the unavailability control operation further includes an indication requesting the first device (110) to communicate with the second device (120) in the preset time period, determining whether to communicate with the second device (120) in the preset time period; and
based on the determination, transmitting a response message indicating whether the first device (110) agrees to communicate with the second device (120) in the preset time period to the third device (130) via an initial control frame.

6. A method for communication, comprising:
transmitting, by a second device (120) to a first device (110), information associated with an unavailability control operation of the first device (110) with a predetermined frame structure, wherein the information at least indicates that the second device (120) will transmit first data of a first type in a preset time period;
transmitting the first data to the first device (110) in the preset time period.

7. The method according to claim 6, further comprising:
receiving unavailability information of the first device (110) from the first device (110) with another predetermined frame structure within a transmission opportunity of the first device (110), wherein the unavailability information at least indicates that the first device (110) will transmit second data of a second type in the preset time period;
responsive to determining that a second priority of the second type is lower than a first priority of the first type, generating information associated with the unavailability control operation, wherein the information further includes an indication requesting the first device (110) to communicate with the second device (120) in the preset time period; and
transmitting the information including the indication to the first device (110), wherein transmitting the first data to the first device (110) comprises: receiving a response message for the indication from the first device (110) via a Multi-STA Block Ack frame within a transmission opportunity of the second device (120); and responsive to determining that the response message indicates that the first device (110) agrees to communicate with the second device (120) in the preset time period, transmitting the first data to the first device (110) in the preset time period.

8. The method according to claim 7, wherein the unavailability information and the response message are received from the first device (110) via a Multi-STA Block Ack frame or a Buffer Status Report Poll initial control frame or a Multi-User Request to Send frame, and wherein the information including the indication is transmitted to the first device (110) via the Buffer Status Report Poll initial control frame or the Multi-User Request to Send frame.

9. The method according to any one of claims 6-8, further comprising:
receiving the unavailability information from the first device (110) via a Target Wakeup Time element with a specific frame including a channel use request, wherein the Target Wakeup Time element comprises at least a peer-to-peer Target Wakeup Time element and a broadcast Target Wakeup Time element; and
transmitting the information including the indication to the first device (110) via the Target Wakeup Time element with the specific frame.

10. The method according to any one of claims 6-9, further comprising:
receiving a capability report from the first device (110) via a management frame, the capability report indicating whether the first device (110) supports an unavailability control mode, wherein the unavailability control mode comprises at least one of: a periodic unavailability operation mode; a dynamic unavailability operation mode; a limited operation mode; or an unavailability operation mode based on a priority threshold.

11. A method for communication, comprising:
receiving, by a third device (130) from a first device (110), unavailability information of the first device (110) via a Target Wakeup Time element with a specific frame including a channel use request, wherein the unavailability information at least indicates that the first device (110) will transmit second data of a second type in a preset time period, the Target Wakeup Time element comprising at least a peer-to-peer Target Wakeup Time element and a broadcast Target Wakeup Time element; and
transmitting the unavailability information of the first device (110) to a second device (120) via a management frame or an initial control frame.

12. The method according to claim 11, further comprising:
receiving information associated with the unavailability control operation of the first device (110) from the second device (120), wherein the information further includes an indication requesting the first device (110) to communicate with the second device (120) in the preset time period;
transmitting the information including the indication to the first device (110) via an initial control frame or a management frame, wherein the management frame includes a beacon frame and a channel use request; and
receiving a response message indicating whether the first device (110) agrees to communicate with the second device (120) in the preset time period from the first device (110) via an initial control frame; and
transmitting the response message to the second device (120) via an initial control frame.

13. The method according to any one of claims 11-12, further comprising:
exchanging capability negotiation information with the second device (120) via a management frame, the capability negotiation information indicating that the second device (120) and the third device (130) possess the capability to share information associated with the unavailability control operation of the first device (110), wherein the information at least indicates that the second device (120) will transmit first data of a first type in the preset time period, the management frame includes a beacon frame and a public action frame; and
receiving a capability report from the first device (110) via a management frame, the capability report indicating whether the first device (110) supports an unavailability control mode, wherein the unavailability control mode comprises at least one of: a periodic unavailability operation mode; a dynamic unavailability operation mode; a limited operation mode; or an unavailability operation mode based on a priority threshold.

14. The method according to any one of claims 1-13, wherein the information further comprises at least one of: a service priority indication; a low latency service indication; or an emergency preparedness communications service indication.

15. The method according to any one of claims 1-14, wherein the information further comprises:
a control type causing a change in an unavailability event of the first device (110), wherein the control type includes a teardown control type and a suspend control type;
an unavailability control reason indicated by the second device (120); and
an unavailability duration of the first device (110), wherein the unavailability duration includes a suspend duration associated with the suspend control type,
wherein the unavailability control reason comprises: the second device (120) will transmit high priority data; the second device (120) will transmit data associated with the low latency service; or the second device (120) will transmit data associated with the emergency preparedness communications service.

16. The method according to any one of claims 1-15, wherein the first device (110) comprises a terminal equipment or a network equipment, the second device (120) comprises the network equipment or the terminal equipment, and the third device (130) comprises the terminal equipment or the network equipment, and wherein the first device (110), the second device (120) and the third device (130) comprise devices supporting multi-link operation.

17. A device for communication, comprising: at least one processor (1410); and at least one memory (1420) coupled to the at least one processor (1410), the at least one memory (1420) having instructions stored therein, the at least one memory (1420) and the instructions further configured to, with the at least one processor (1410), cause the device to perform the method according to any one of claims 1-16.

18. A computer readable storage medium having a computer program stored thereon, the computer program comprising instructions which, when executed by a processor on a device, cause the device to perform the method according to any one of claims 1-16.
